# EUROPEAN PATENT SPECIFICATION

(11) **EP 1 036 040 B1**
(45) Date of publication and mention of the grant of the patent: **29.05.2002**
(21) Application number: 98962405.1
(22) Date of filing: 02.12.1998
(51) Int. Cl.: C03B 3/02, C03B 5/02, C03B 5/235

(54) **PROCESSES AND APPARATUS FOR THE PRODUCTION OF MAN-MADE VITREOUS FIBRES**
VERFAHREN UND VORRICHTUNG ZUM HERSTELLEN VON GLASARTIGEN SYNTHETISCHEN FASERN
PROCEDES ET APPAREIL DE PRODUCTION DE FIBRES VITREUSES

(30) Priority: 02.12.1997 EP 97309676
(43) Date of publication of application: 20.09.2000
(73) Proprietor: Rockwool International A/S, DK-2640 Hedehusene (DK)
(72) Inventor: JENSEN, Leif, Moller, DK-4000 Roskilde (DK)
(74) Representative: Samuels, Lucy Alice
(86) International application number: EP9807822
(87) International publication number: WO9928246

(56) References cited:
- EP-A- 0 109 086
- EP-A- 0 743 286
- WO-A-82/00460
- WO-A-90/07470

## Description

This invention relates to the production of man-made mineral vitreous fibres (MMVF) using a cupola or other shaft furnace.

In such processes, a stack of particulate mineral material is provided in the shaft furnace, combustion air is blown into the furnace through tuyeres at or near the base and the stack is heated by combustion of fuel within the furnace so as to melt the mineral material and collect melt at the base of the furnace, and MMV fibres are then formed from the melt in conventional manner, for instance by centrifugal spinning.

The fuel can be gas, but is generally a solid carbonaceous fuel, in which event the shaft furnace is usually a cupola.

In order to maximise the temperature in the furnace and in order to minimise the risk of unwanted cooling of melt which is draining past the tuyere it is usual to preheat the combustion air. The temperature to which it is preheated is normally up to around 500°C or 550C°. Such temperatures are sufficient to prevent unacceptable chilling, or even solidification, of the melt draining past the tuyeres and it is unnecessary to incur the practical difficulties that would be associated with the use of higher preheating temperatures. In particular, when the combustion air is preheated up to a temperature of not more than about 550°C, the tuyere equipment can be made of ordinary steel, but if higher temperatures are required then special steels would be necessary. This would significantly increase the cost of the equipment but no significant advantage in the process would be obtained.

Although shaft furnaces of this type have proved satisfactory for the production of conventional MMVF melts from conventional MMVF mineral charges, we have discovered that there are several instances where it would be advantageous to be able to modify the melt without having to alter the main charge. For instance in some instances it is not convenient to introduce some or all of an important component as briquettes or other conventional charge material and it would be preferred to be able to introduce some or all of it as powder. For instance, it can be inconvenient to introduce in briquette form as much aluminium-containing material as may be needed for making high-aluminium fibres.

In other instances some of the material to be used for forming the melt may contain volatile or other toxic materials and it is desirable to minimise the risk of such materials escaping into the effluent gases.

In other instances it would be desirable to be able to modify the melt properties or analysis rapidly either in response to unwanted variations in the melt properties (for instance as a result of using a variable waste material as part of the charge) or with the intention of changing production from one type of fibre to another type.

We would therefore like to be able to introduce significant amounts of powdered material into the shaft furnace by a route other than through the main briquette or other charge, so as to facilitate the satisfactory production of MMV fibres of the desired analysis from conveniently available materials.

In particular, we would like to be able to introduce this additional material with the combustion air which is fed through one or more of the tuyeres.

It tends to be impractical to preheat the powdered material and the entraining air to the same temperature as the combustion air (typically 500 to 550°C). The inevitable consequence of adding powdered material through the tuyeres therefore is that a relatively cold powder, having much higher heat capacity per unit volume than the combustion air, together with some relatively cold transport air, is introduced with the combustion air. This inevitably results in significant cooling in and around the tuyeres in the furnace. This can cause an unsatisfactory reduction in the temperature of the melt and can cause agglomeration of the added material and non-uniform melt composition.

The problems increase as the melting point of the powder increases and as the amount which is to be introduced increases.

The difficulties of introducing powder through tuyeres of cupola furnaces are already known, for instance as is discussed in EP-B-618,419. The particular process described in that publication involves adding the powder to the flame of an oxy-fuel burner. Unfortunately this incurs various disadvantages.

The energy cost for the oxy fuel burner is higher than the energy cost for combustion of fuel within the furnace (especially when using coke) and so the process increases costs undesirably. Additionally, the oxy-fuel combustion gases dilute the air stream undesirably and although they may result in the generation of increased energy close to the tuyere they do not give significant energy increase higher up the shaft furnace. Further, the combustion may cause endothermic reactions such as the Boudard and water gas reactions and may promote reducing conditions. Also the dilution of the gases through the furnaces increases the amount of effluent gases.

It is generally known to inject materials into the furnace. For instance WO-A-87/07591 describes the injection of oxygen and fuel into the central portion of a shaft furnace. WO-A-90/07470 describes the injection of mineral wool waste into a furnace through a pipe. It is stated that the waste material introduced is molten and it appears that the described system aims at flash melting of the waste mineral wool material before it reaches the furnace. It also appears that the material is not injected near the base of the furnace but only passes towards the base of the furnace after it has been injected.

US-A-5,046,144 is similar. In US-A-5,046,144, a system for melting raw material for mineral wool production comprises a shaft furnace in which the raw material is heated, partly by hot gas formed by plasma heating and partly by hot gas formed by combustion of gaseous hydrocarbons. This publication and describes the possibility of introducing finely divided waste mineral wool into the hot stream of gas generated in the plasma generator. The temperature of the plasma heating is said to be about 5,000°C, at which temperature finely divided waste mineral wool would be molten.

The present invention, in contrast, is concerned specifically with the problem of introducing material through the tuyeres which are positioned around the base of the furnace. These previous publications therefore do not address the problems with tuyere injection discussed above, with which the invention is concerned.

According to the invention we provide a process for forming man-made vitreous fibres comprising providing granular mineral material in a shaft furnace, blowing combustion air into the furnace through tuyeres and heating the mineral material by combustion of fuel within the furnace and thereby forming a melt of the mineral material and forming MMV fibres from the melt, and in this process powdered material is injected with the combustion air through at least one of the tuyeres and the combustion air for that tuyere at least is preheated by indirect or plasma torch heating to above 700°C.

As a result of using indirect or plasma torch heating, the disadvantages associated with oxy fuel burners are eliminated. As a result of preheating the combustion air to above 700°C, it is sufficiently hot that significant amounts of powdered material (even of high heat capacity per unit volume and/or high melting point) can be introduced without causing chilling and other problems with the melt in the shaft furnace.

In the invention powdered material is injected into the furnace. This is in contrast with the system of for instance WO-A-90/07470 in which the aim appears to be flash melting of the mineral wool waste before it reaches the furnace. In the invention the injected material is powdered, that is it is in solid form at the point when it enters the furnace. It is preheated before it reaches the furnace. It is melted in the furnace and not as it travels towards the furnace in or prior to the tuyeres.

It is of course necessary to use heat resistant steel or other alloy for all the surfaces which are contacted by the preheated air, since the normal steels tend to be inadequately heat resistant at temperatures above 550°C. However the cost of using these special heat resistant steels or other alloys is justified because of the ability to introduce significant amounts of useful powdered materials without causing undesirable chilling of the melt or unwanted changes in chemical conditions in the base of the furnace.

The combustion air is heated to above 700°C, preferably to at least 750°C, generally at least 800°C and preferably at least 850°C. It is usually unnecessary for it to be heated to a temperature of above 1200°C and often about 1000 or 1050°C is a convenient maximum.

The combustion air can be heated to the desired temperature using a plasma torch because this is capable of giving the desired increase in temperature of the combustion air without generating excessive amounts of effluent gas and without making undesirable modifications in the chemical environment in the furnace. Generally, however, indirect heating is used.

The indirect heating of the combustion air can be by a radiation burner or by heat exchange, for instance by passage across electric heating elements. By saying that we use indirect heating, we intend to cover any appropriate method of generating the temperatures that does not involve significant amounts of fuel combustion within the combustion air as it approaches or enters the tuyeres.

If the powdered material is only being added through one tuyere, it is sufficient for the combustion air to only that tuyere to be preheated to above 700°C or 750°C. If the powdered material is being added through more than one tuyere, the combustion air for each tuyere through which powdered material is introduced must be preheated.

The combustion air which is fed through the tuyeres is generally supplied from a blast ring manifold which is connected to each tuyere by a connecting tube. In the invention this connecting tube may include or pass through a heat exchanger, such as across electrical heating elements or across the face of a radiation burner, by which the air is heated to above 700°C.

The powdered material which is added through the tuyeres generally has a size of not more than 3mm, typically 0.1 to 2mm. It should be as dry as possible, typically below 20% moisture content.

The powder is generally entrained in a separate cool or cold air supply by which it is ejected into the combustion air as it approaches or passes through the tuyeres. This separate air supply may itself be preheated either to moderate temperatures, for instance up to 150°C or to higher temperatures, for instance as much as 300°C. The amount of entraining air is generally from 5 to 30% (by volume at standard pressure) of the total amount of combustion air and entraining air which is being forced through a tuyere.

The tuyere may be of conventional construction, except for the provision of a pipe or other means, generally coaxial with the tuyere, for injecting the powder entrained in cool or cold air. The powder may be injected into the air by a rotary airlock feeder or by any other convenient apparatus known for providing a stream of powder entrained in cool air.

The furnace can be any shaft furnace to which combustion air is supplied through tuyeres. The furnace contains a stack of mineral material heated by combustion of gas or, preferably, solid carbonaceous fuel in the shaft furnace. Molten material usually collects at the base of the furnace as a pool, or may be run off as it is formed. The tuyeres are normally located just above the base of the furnace, and thus just above the pool if there is one. Typically the furnace is a cupola furnace.

The total amount of powdered material which is added to the furnace through one or more tuyeres, is generally from 1 to 25%, frequently 2 or 3% up to about 15 or 20%, based on the total mass of the mineral charge to the furnace and the powder which is being added to the tuyeres.

The powdered material may be any material which is meltable or combustible in the furnace when added through the tuyere or tuyeres (although it does not melt before it reaches the furnace). Usually it is mineral but some powdered coke or other carbonaceous material can be added if desired. Mixtures of inorganic and organic (combustible) material may be used. For instance a mixture of 20 to 80% inorganic and 80 to 20% organic materials can contribute usefully both to the mineral melt and heat energy.

When the main purpose of adding the mineral is to change the analysis of the melt, for instance so as to raise the amount of at least one element by at least 2% (by weight of oxides based on the total amount of melt) then the powder will be a raw material which is high (e.g., above 20% or 40% measured as oxide) in the desired element and which may be substantially free of any toxic or volatile components. For instance, when it is desired to increase the amount of aluminium in the melt, bauxite, corund, high aluminium kaolinite clay or high aluminium-containing minerals such as gehlenite, sillimanite, kyanite or andalusite, or crushed fire clay bricks may be added. Other suitable materials include high aluminium content waste materials, discussed below. Examples of other additives that may be used are lime (to provide Ca), quartz sand (e.g., foundry sand) to provide Si, haematite or magnetite to provide Fe, or Dolomite, Magnesite, Olivin sand or Fe-Cr slag to provide Mg.

Suitable high aluminium, biologically soluble, fibres which can advantageously be made in the present invention are described in WO-A-96/14454 and WO-A-96/14274. Others are described in WO-A-97/29057, DE-U-2,970,027 and WO-A-97/30002. Reference should be made to each of these. In general the fibres and the melt from which they are formed have an analysis (measured as % by weight of oxides) within the various ranges defined by the following normal and preferred lower and upper limits:
SiO₂ at least 30, 32, 35 or 37; not more than 51, 48, 45 or 43
Al₂O₃ at least 14, 15, 16 or 18; not more than 35, 30, 26 or 23
CaO at least 2, 8 or 10; not more than 30, 25 or 20
MgO zero or at least 2 or 5; not more than 25, 20 or 15
FeO (including Fe₂O₃) 0, at least 2, 5; not more than 15, 12 or 10
FeO + MgO at least 10, 12, 15; not more than 30, 25, 20
Na₂O + K₂O zero or at least 1; not more than 19, 14, 10
CaO + Na₂O + K₂O at least 10, 15; not more than 30, 25
TiO₂ zero or at least 1; not more than 6, 4, 2
TiO₂ + FeO at least 4, 6; not more than 18, 12
B₂O₃ zero or at least 1; not more than 5, 3
P₂O₅ zero or at least 1; not more than 8, 5
Others zero or at least 1; not more than 8, 5

The fibres preferably have a sintering temperature above 800°C, more preferably above 1000°C.

The melt preferably has a viscosity at fibre forming temperature of 5 to 100 poise, more preferably 10 to 70 poise at 1400°C.

The fibres preferably have an adequate solubility in lung fluids as shown by in vivo tests or in vitro tests, typically conducted in physiological saline buffered to about pH 4.5. Suitable solubilities are described in WO-A-96/14454. Usually the rate of dissolution is at least 10 or 20nm per day in that saline.

The preferred fibres which are made in the invention have an analysis which contains at least 15%, usually at least 17% and most usually at least 18% Al₂O₃, e.g., up to 30, 35 or 40%.

The invention can be used when the powdered material which is to be injected through the tuyere or tuyeres is powdered waste material. In particular, preferably it is powdered waste material contaminated with at least 0.01% or at least 0.1% volatile and/or toxic components such as mercury, zinc, cadmium, lead, arsenic, tin, antimony or sulphur, or at least 0.3% halogen.

As a result of the invention these wastes, with their associated toxic or volatile components, can now be introduced into the furnace in solid form very close to the melt, thereby promoting the incorporation of the powdered material into the melt. This gives the advantage that volatilisation or other entrainment into the effluent gases from the furnace is minimised while allowing the relatively toxic or other waste material to provide a useful and therefore very cost effective proportion of the total mineral charge.

Suitable waste materials that can be added in this way include slags from the metallurgical industry, especially steelmaking slags such as converter slags, ladle slags or EAF slags, and slags from the ferro-alloy industry such as ferro-chromium, ferro-manganese or ferro-silicon slags; slags and residues from the primary production of aluminium, such as spent aluminium pot lining or red mud; dried or wet sludge from the paper industry; sewage sludge; bleaching clay; residues from the incineration of household and industrial wastes, especially slags or filter ashes from the incineration of municipal solid wastes; glass waste (or slags) from the vitrification of other waste products; glass cullets; waste products from the mining industry, especially minestone from the excavation of coal; residues from the incineration of fossil fuel, especially from the combustion of coal at power plants; spent abrasive sand; spent moulding sand from iron and steel casting; waste sieving sand; glass reinforced plastic; fines and breakage waste from the ceramic and brick industry. Other suitable wastes having high aluminium content are slags and residues from the secondary production of aluminium, which are often generically described as "aluminium dross" or "aluminium oxide dross". In particular waste materials can be used which contain 0.5 to 10 wt.%, preferably 2 to 6 wt.%, more preferably below 5 wt.%, metallic aluminium, and 50 to 90 wt.%, preferably below 85 wt.%, more preferably 60 to 72 wt.%, alumina Al₂O₃. Wastes from the aluminium casting process are particularly useful. This process provides one specific alumina-rich waste material which is described in the industry as "alu-dross". This tends to contain significant proportions of metallic aluminium and is thus treated in order to retrieve the metallic aluminium. The alu-dross is generally crushed, milled and sieved. This produces some aluminium for resale and an aluminium-rich fraction which is sent to a furnace for reuse. As a byproduct an alumina-rich powder is also produced, described as "crushed alu-dross". The aluminium-rich fraction, optionally together with other aluminium-containing waste materials, is subjected to remelting in a furnace. This may be a rotating furnace or kiln. The aluminium waste may be subjected to plasma heating. A conventional furnace may also be used. Salt is usually added to the furnace in order to reduce the surface tension of the aluminium and reduce oxidation. This process produces an aluminium fraction for resale, more alu-dross and a salt slag material. The salt slag can be subjected to a wet chemical process (involving water washing and high temperature treatment) which produces a salt fraction, which is recycled to the furnace, and a further alumina-rich powder, described as "treated aluminium salt slag". Materials of this type are described for inclusion in briquettes in our publication number WO-A-99/28252 and reference should be made to that. Toxic virgin rock can also be used as the waste.

The invention is of particular value when the melting point of the powder is above 1200°C and preferably above 1500°C, for instance 1600°C to 2000°C. Heating the combustion air to temperatures below this preheats but does not melt the powder.

An important class of powdered materials which can be used in the invention are those which contain both organic and inorganic components since the organic components contribute to the combustion in the furnace, provided sufficient oxygen is supplied with them. Thus processes in which the powdered material contains 20 to 80% inorganic material and 80 to 20% by weight organic material can simultaneously contribute to the inorganic melt and to the combustion. Examples of powdered materials which can be introduced for this purpose are paper making sludges containing inorganic filler, municipal sludges containing inorganic residues and glass reinforced plastic. This is described in mcre detail in our publication number WO-A-99/28250.

The powdered material may be injected through just one of the tuyeres or some or all of the tuyeres. It may be injected continuously or intermittently. For instance the chemical analysis of the melt or of the fibres formed from the melt can be monitored in-line by, for example, Laser Plasma Spectrometry or Laser Induced Breakdown Spectroscopy or X-Ray Fluorescence, and powdered material may be added to one or more tuyeres in response to the monitored value, as described in our publication number WO-A-99/28251.

The granular mineral material in the furnace typically has a size above 50mm. It may be crushed rock but often it is in the form of briquettes. The material can be any of the mineral materials conventionally used for forming MMVF products. They can be virgin rock or recycled MMVF product or waste materials from other processes but should preferably be substantially free of volatile or toxic components such as cadmium, mercury, zinc, lead, sulphur and halogen. The charge to the furnace generally includes coke or other carbonaceous fuel.

The MMV fibres may be made from the fibre forming mineral melt in conventional manner. Generally they are made by a centrifugal fibre forming process. For instance the fibres may be formed by a spinning cup process in which the melt is thrown outwardly through perforations in a spinning cup, or melt may be thrown off a rotating disc and fibre formation may be promoted by blasting jets of gas through the melt, or fibre formation may be conducted by pouring the melt onto the first rotor in a cascade spinner. Preferably the melt is poured onto the first of a set of two, three or four rotors each of which rotates about a substantially horizontal axis whereby melt on the first rotor is primarily thrown onto the second (lower) rotor although some may be thrown off the first rotor as fibres, and melt on the second rotor is thrown off as fibres although some may be thrown towards the third (lower) rotor, and so forth.

The invention includes novel apparatus for carrying out the process. Thus according to a second aspect of the invention we provide a shaft furnace suitable for use in the production of man-made vitreous fibres having walls within which a stack of granular material may be melted to form a melt, tuyeres through which combustion air may be blown into the furnace and means for injecting powdered material into the furnace with the combustion air through at least one of the tuyeres, characterised in that the furnace includes means for preheating the combustion air for at least that tuyere to above 700°C by indirect or plasma torch heating. In a further aspect apparatus for the production of man-made vitreous fibres comprises a shaft furnace of this type and means for forming fibres from the melt formed in the furnace.

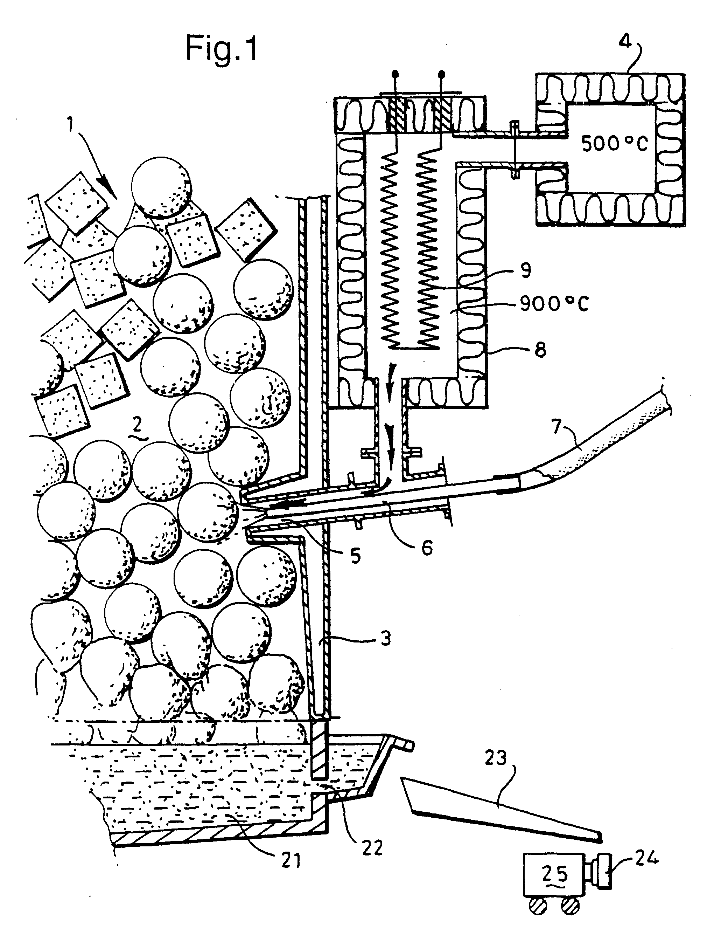

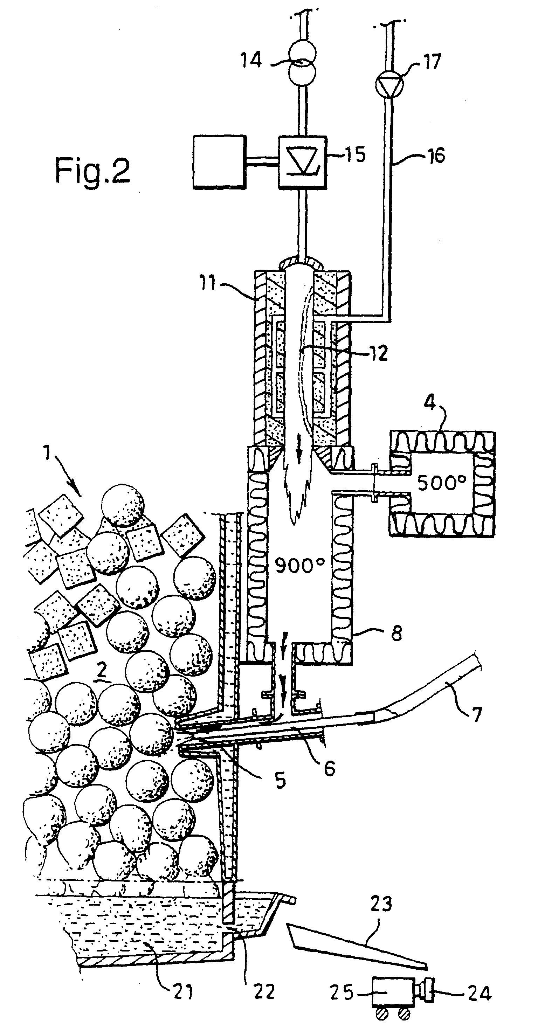

Suitable apparatus is illustrated in Figures 1 and 2 of the accompanying drawings, which are diagrammatic representations of part of two different forms of apparatus useful for carrying out the invention.

In Figure 1, part of a shaft cupola furnace 1 having water cooled hollow walls 3 filled with a charge of briquettes 2 is shown. A conventional tuyere 5 is connected to a conventional blast ring 4 which supplies combustion air at 500°C. A narrow pipe 6 extends through the tuyere and discharges powder entrained in cold air supplied from a tube 7. In conventional apparatus, the blast ring 4 would be connected directly to the tuyere 5, but in Figure 1 the blast air passes through a super-heating stage 8 containing electric elements 9 by which it is indirectly heated up to about 900°C prior to entry to the tuyere 5.

The stack of briquettes 2 melts gradually in the furnace due to combustion of coke in the briquettes to form a melt pool 21 which accumulates in conventional manner at the base of the stack. There is a conventional arrangement of an outlet 22 by which melt is discharged into a gutter 23 from which it is poured on to the uppermost rotor 24 of a cascade spinner 25. Fibres are formed off the rotors of this spinner in conventional manner.

In Figure 2, much of the apparatus is the same as in Figure 1 but the electric heater 9 is omitted and is replaced with a plasma torch 11. The plasma torch 11 has the anode and the cathode both placed in the same tube where a plasma arc 12 is established. The power supply for the plasma torch is shown as 13 and comprises a transformer 14 and rectifiers 15. A small amount of gas is blown through the tube 16 by compressor 17 in order to transfer the heat generated by the plasma arc 12. The gas typically is air.

When using the apparatus shown in Figure 1 in a cupola furnace, but without the heating from 500°C to 900°C, it was possible to blow 400 kilograms per hour of granulated mineral wool waste having a melting temperature of about 1200°C, without any apparent adverse effect on the melt pool. When bauxite having a melting point of 1900°C was injected under similar conditions, the maximum amount that could be introduced before clogging started occurring was about 70 kilograms per hour. However when the indirect heating was applied to heat the combustion air to about 900°C, the amount of bauxite that could be added increased to about 250 kilograms per hour before any adverse effect was observed.

## Claims

1. A process for forming man-made vitreous (MMV) fibres comprising providing a stack (2) of granular mineral material in a shaft furnace (1), blowing combustion air into the furnace through tuyeres (5) and heating the stack by combustion of fuel within the furnace and thereby forming a melt (21) of mineral material and forming MMV fibres from the melt, **characterised in that** the process comprises injecting powdered material into the furnace with the combustion air through at least one of the tuyeres and **in that** the combustion air for at least that tuyere is preheated by indirect or plasma torch heating to above 700°C.

2. A process according to claim 1 in which the furnace is a cupola containing solid combustible material.

3. A process according to any preceding claim in which the combustion air for the or each tuyere through which powdered material is injected is preheated to a temperature of 800 to 1200°C.

4. A process according to any preceding claim in which the preheating is by indirect heat exchange with electric heaters (9) or a radiation burner.

5. A process according to any preceding claim in which the powdered material which is injected with the combustion air through a tuyere is supplied to that tuyere whilst entrained in cool air.

6. A process according to any preceding claim in which the powdered material has a melting point above 1500°C.

7. A process according to any preceding claim in which the powdered material is a powdered waste material.

8. A process according to any of claims 1 to 6 in which the powdered material is a powdered waste material which is a blend of 20 to 80% inorganic material and 80 to 20% by weight organic material.

9. A process according to any preceding claim in which the powdered material is added in response to a change in the chemical composition of the melt.

10. A process according to any preceding claim in which the powdered material contains at least 20% aluminium measured as oxide and the fibres contain at least 15% Al₂O₃.

11. A process according to any preceding claim in which the powdered material is injected into the furnace through only one tuyere.

12. A process according to any preceding claim in which the total amount of powdered material which is injected into the furnace with the combustion air through at least one of the tuyeres is from 1 to 25 wt.%, preferably from 2 to 20 wt.%, based on total weight of mineral charge plus powdered materials.

13. A process according to any preceding claim in which the powdered material is powdered waste material contaminated with at least 0.01%, preferably at least 0.1%, volatile and/or toxic components or at least 0.3% halogen.

14. A shaft furnace (1) suitable for use in the production of man-made vitreous fibres having walls (3) within which a stack (2) of granular material may be melted to form a melt (21), tuyeres (5) through which combustion air may be blown into the furnace and means for injecting powdered material into the furnace with the combustion air through at least one of the tuyeres, **characterised in that** the furnace includes means (9) for preheating the combustion air for at least that tuyere to above 700°C by indirect or plasma torch heating.

15. Apparatus for the production of man-made vitreous fibres comprising a shaft furnace (1) according to claim 14 and means for forming fibres from the melt (21) formed in the furnace.

## Patentansprüche

1. Verfahren zum Bilden von künstlichen glasartigen Fasern (MMV-Fasern) umfassend das Bereitstellen einer Schichtung (2) von granulärem mineralischem Material in einem Schachtofen (1), das Einblasen von Verbrennungsluft in den Ofen durch Winddüsen (5) und das Erwärmen der Schichtung durch Verbrennung von Brennstoff im Ofen und dadurch Bilden einer Schmelze (21) von mineralischem Material und das Bilden von MMV-Fasern aus der Schmelze, **dadurch gekennzeichnet, daß** das Verfahren das Einblasen von pulverförmigem Material in den Ofen mit der Verbrennungsluft durch mindestens eine der Winddüsen umfaßt und wobei die Verbrennungsluft für zumindest diese Winddüse durch indirekte Erwärmung oder Plasmabrenner-Erwärmung auf über 700°C vorgewärmt wird.

2. Verfahren nach Anspruch 1, in welchem der Ofen ein Kupolofen ist, der festes, brennbares Material enthält.

3. Verfahren nach irgendeinem vorhergehenden Anspruch, in welchem die Verbrennungsluft für die oder jede Winddüse, durch die pulverförmiges Material eingeblasen wird, auf eine Temperatur von 800 bis 1.200°C vorgewärmt wird.

4. Verfahren nach irgendeinem vorhergehenden Anspruch, in welchem das Vorwärmen durch indirekten Wärmeaustausch mit elektrischen Heizeinrichtungen (9) oder einem Strahlungsbrenner ausgeführt wird.

5. Verfahren nach irgendeinem vorhergehenden Anspruch, in welchem das pulverförmige Material, das mit der Verbrennungsluft durch eine Winddüse eingeblasen wird, zu dieser Winddüse geführt wird, während es von kalter Luft mitgeschleppt wird.

6. Verfahren nach irgendeinem vorhergehenden Anspruch, in welchem das pulverförmige Material einen Schmelzpunkt über 1.500°C aufweist.

7. Verfahren nach irgendeinem vorhergehenden Anspruch, in welchem das pulverförmige Material ein pulverförmiges Abfallmaterial ist.

8. Verfahren nach irgendeinem der Ansprüche 1 bis 6, in welchem das pulverförmige Material ein pulverförmiges Abfallmaterial ist, das eine Mischung von 20 bis 80 Gew.-% anorganischem Material und 80 bis 20 Gew.-% organischem Material darstellt.

9. Verfahren nach irgendeinem vorhergehenden Anspruch, in welchem das pulverförmige Material als Antwort auf eine Änderung in der chemischen Zusammensetzung der Schmelze zugegeben wird.

10. Verfahren nach irgendeinem vorhergehenden Anspruch, in welchem das pulverförmige Material mindestens 20% Aluminium, gemessen als Oxid, enthält und die Fasern mindestens 15% Al₂O₃ enthalten.

11. Verfahren nach irgendeinem vorhergehenden Anspruch, in welchem das pulverförmige Material in den Ofen durch nur eine Winddüse eingeblasen wird.

12. Verfahren nach irgendeinem vorhergehenden Anspruch, in welchem die Gesamtmenge an pulverförmigem Material, die in den Ofen mit der Verbrennungsluft durch mindestens eine der Winddüsen eingeblasen wird, 1 bis 25 Gew.-%, vorzugsweise 2 bis 20 Gew.-%, bezogen auf das Gesamtgewicht der mineralischen Charge plus pulverförmiger Materialien, beträgt.

13. Verfahren nach irgendeinem vorhergehenden Anspruch, in welchem das pulverförmige Material ein pulverförmiges Abfallmaterial ist, das mit mindestens 0,01%, vorzugsweise mindestens 0,1%, flüchtiger und/oder giftiger Komponenten oder mindestens 0,3% Halogen verunreinigt ist.

14. Schachtofen (1), der für die Verwendung bei der Herstellung von künstlichen glasartigen Fasern geeignet ist, mit Wänden (3), innerhalb derer eine Schichtung (2) von granulärem Material unter Bildung einer Schmelze (21) geschmolzen werden kann, Winddüsen (5), durch die Verbrennungsluft in den Ofen eingeblasen werden kann, und einer Einrichtung zum Einblasen von pulverförmigem Material in den Ofen mit der Verbrennungsluft durch mindestens eine der Winddüsen, **dadurch gekennzeichnet, daß** der Ofen eine Einrichtung (9) zum Vorwärmen der Verbrennungsluft für zumindest diese Winddüse auf über 700°C durch indirektes Erwärmen oder Erwärmen mit einem Plasmabrenner beinhaltet.

15. Vorrichtung für die Herstellung von künstlichen glasartigen Fasern umfassend einen Schachtofen (1) nach Anspruch 14 und eine Einrichtung zum Bilden von Fasern aus der im Ofen gebildeten Schmelze (21).

## Revendications

1. Procédé pour former des fibres vitreuses synthétiques (MMV) comprenant les opérations consistant à fournir un empilage (2) de matériau minéral granulaire dans un fourneau à cuve (1), souffler de l'air de combustion dans le four à travers des tuyères (5) et chauffer l'empilage par combustion de combustible à l'intérieur du four et former ainsi une fonte (21) de matériau minéral et former des fibres MMV à partir de la fonte, **caractérisé en ce que** le procédé comprend l'injection de matériau en poudre dans le four avec l'air de combustion à travers au moins une des tuyères et **en ce que** l'air de combustion est, pour au moins cette tuyère, préchauffé par chauffage indirect ou par torche à plasma à plus de 700 °C.

2. Procédé selon la revendication 1 dans lequel le four est un cubilot contenant un matériau combustible solide.

3. Procédé selon l'une quelconque des revendications précédentes dans lequel l'air de combustion pour la ou chaque tuyère à travers laquelle du matériau en poudre est injecté est préchauffé à une température allant de 800 à 1200 °C.

4. Procédé selon l'une quelconque des revendications précédentes dans lequel le préchauffage a lieu par échange thermique indirect avec des réchauffeurs électriques (9) ou un brûleur à rayonnement.

5. Procédé selon l'une quelconque des revendications précédentes dans lequel le matériau en poudre qui est injecté avec l'air de combustion à travers une tuyère est transmis à cette tuyère par entraînement par de l'air frais.

6. Procédé selon l'une quelconque des revendications précédentes dans lequel le matériau en poudre a un point de fusion situé au-dessus de 1500°C.

7. Procédé selon l'une quelconque des revendications précédentes dans lequel le matériau en poudre est formé de déchets en poudre.

8. Procédé selon l'une quelconque des revendications 1 à 6 dans lequel le matériau en poudre est formé de déchets en poudre qui sont un mélange de 20 à 80 % de matériau non organique et de 80 à 20% en poids de matériau organique.

9. Procédé selon l'une quelconque des revendications précédentes dans lequel le matériau en poudre est ajouté en réponse à une modification de la composition chimique de la fonte.

10. Procédé selon l'une quelconque des revendications précédentes dans lequel le matériau en poudre contient au moins 20 % d'aluminium mesuré sous forme d'oxyde et les fibres contiennent au moins 15 % d'Al₂O₃.

11. Procédé selon l'une quelconque des revendications précédentes dans lequel le matériau en poudre est injecté dans le four à travers une seule tuyère.

12. Procédé selon l'une quelconque des revendications précédentes dans lequel la quantité totale de matériau en poudre qui est injectée dans le four avec l'air de combustion à travers au moins une des tuyères est de 1 à 25 % en poids, de préférence de 2 à 20 % en poids, par rapport au poids total de la charge minérale plus les matériaux en poudre.

13. Procédé selon l'une quelconque des revendications précédentes dans lequel le matériau en poudre est formé de déchets en poudre contaminés avec au moins 0,01 %, de préférence au moins 0,1 %, de composants volatils et / ou toxiques ou au moins 0,3 % d'halogènes.

14. Fourneau à cuve (1) conçu pour être utilisé dans la production de fibres vitreuses synthétiques possédant des parois (3) à l'intérieur desquelles un empilage (2) de matériau granulaire peut être fondu pour former une fonte (21), des tuyères (5) par lesquelles de l'air de combustion peut être soufflé dans le four et un moyen pour injecter du matériau en poudre dans le four avec l'air de combustion à travers au moins une des tuyères, **caractérisé en ce que** le four comprend un moyen (9) pour préchauffer l'air de combustion pour au moins cette tuyère à plus de 700 °C par chauffage indirect ou par torche à plasma.

15. Dispositif pour la production de fibres vitreuses synthétiques comprenant un fourneau à cuve (1) selon la revendication 14 et un moyen pour former des fibres à partir de la fonte (21) formée dans le four.
